# FASCICULE DE BREVET EUROPEEN

(11) **EP 3 634 777 B1**
(45) Date de publication et mention de la délivrance du brevet: **09.06.2021**
(21) Numéro de dépôt: 18724975.0
(22) Date de dépôt: 25.04.2018
(51) Int. Cl.: B60C 9/20, B60C 11/13

(54) **PNEUMATIQUE COMPRENANT UNE ARCHITECTURE ET UNE SCULPTURE OPTIMISÉES**
REIFEN MIT OPTIMIERTER ARCHITEKTUR UND OPTIMIERTEM LAUFFLÄCHENMUSTER
TYRE COMPRISING OPTIMISED ARCHITECTURE AND TREAD PATTERN

(30) Priorité: 08.06.2017 FR 1755081
(43) Date de publication de la demande: 15.04.2020
(73) Titulaire: Compagnie Générale des Etablissements Michelin, 63000 Clermont-Ferrand (FR)
(72) Inventeur: FEVRIER, Pierre, 63040 Clermont-Ferrand cedex 9 (FR); ABINAL, Richard, 63040 Clermont-Ferrand cedex 9 (FR); ALBOUY, Mathieu, 63040 Clermont-Ferrand cedex 9 (FR); BRUNEAU, François-Xavier, 63040 Clermont-Ferrand cedex 9 (FR); CHARREIRE, Cyril, 63040 Clermont-Ferrand cedex 9 (FR); PALLOT, Patrick, 63040 Clermont-Ferrand cedex 9 (FR)
(74) Mandataire: Desbordes, Guillaume
(86) Numéro de dépôt international: PCT/FR2018/051046
(87) Numéro de publication internationale: WO 2018/224743

(56) Documents cités:
- EP-A2- 0 067 111
- WO-A1-2016/139005
- JP-A- 2011 031 841
- US-A- 3 133 583
- US-A- 3 225 812

## Description

### DOMAINE DE L'INVENTION

La présente invention concerne un pneumatique destiné à être monté sur un véhicule, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Dans ce qui suit, l'expression « à l'aplomb de » signifie « pour chaque méridien, radialement intérieur dans la limite des coordonnées axiales délimitées par ». Ainsi « les points d'une couche de travail à l'aplomb d'un sillon » désignent pour chaque méridien, l'ensemble des points de la couche de travail radialement intérieurs au sillon dans la limite des coordonnées axiales délimitées par le sillon.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est la surface de roulement et dont la plus radialement intérieure est appelée surface de fond de sculpture. La surface de fond de sculpture, ou surface de fond, est définie comme la surface translatée de la surface de roulement radialement vers l'intérieur d'une distance radiale égale à la profondeur de sculpture. Il est courant que cette profondeur soit dégressive sur les portions circonférentielles les plus axialement extérieures, appelées épaules, de la bande de roulement.

De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frette composée d'éléments de renforcement formant, avec la direction circonférentielle, un angle compris entre 0° et 10°, l'armature de frettage étant le plus souvent mais pas obligatoirement radialement extérieure aux couches de travail.

Pour toute couche d'éléments de renforcement d'armature de sommet, de travail, ou autre, une surface continue, dite surface radialement extérieure (SRE) de la dite couche, passe par le point le plus radialement extérieur de chaque élément de renforcement, de chaque méridien. Pour toute couche d'éléments de renforcement d'armature de sommet, de travail, ou autre, une surface continue, dite surface radialement intérieure (SRI) de la dite couche, passe par le point le plus radialement intérieur de chaque élément de renforcement, de chaque méridien. Les distances radiales entre une couche d'éléments de renforcement et tout autre point, sont mesurées depuis l'une ou l'autre de ces surfaces et de manière à ne pas intégrer l'épaisseur radiale de la dite couche. Si l'autre point de mesure est radialement extérieur à la couche d'éléments de renforcement, la distance radiale est mesurée depuis la surface radialement extérieure SRE à ce point, et respectivement depuis la surface radialement intérieure SRI à l'autre point de mesure si celui-ci est radialement intérieur à la couche d'éléments de renforcement considérée. Ceci permet de prendre des distances radiales cohérentes d'un méridien à l'autre, sans avoir à tenir compte des variations locales possibles liées aux formes des sections des éléments de renforcement des couches.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

La profondeur de la découpure est la distance radiale maximale entre la surface de roulement et le fond de la découpure. La valeur maximale des profondeurs des découpures est nommée profondeur de sculpture.

Un sillon est une rainure sensiblement circonférentielle, les faces latérales sont sensiblement circonférentielles en ce sens, que leur orientation peut varier localement autour de plus ou moins 45° autour de la direction circonférentielle mais que l'ensemble des motifs appartenant au sillon se retrouve tout autour de la bande de roulement, formant un ensemble sensiblement continu, c'est-à-dire présentant des discontinuités inférieures à 10% en longueur comparativement à la longueur des motifs.

Les sillons circonférentiels délimitent des nervures. Une nervure est composée des motifs de la sculpture compris soit entre un bord axial du pneumatique et un sillon circonférentiel le plus axialement extérieur voisin pour les nervures les plus axialement extérieures, soit compris entre deux sillons circonférentiels voisins.

### ETAT DE LA TECHNIQUE

Un pneumatique doit répondre à de multiples critères de performance portant sur des phénomènes comme l'usure, l'adhérence sur différents types de sol, la résistance au roulement, le comportement dynamique. Ces critères de performance conduisent parfois à des solutions s'opposant à d'autres critères. Ainsi pour une bonne performance en adhérence, le matériau caoutchouteux de la bande de roulement doit être dissipatif et mou. En revanche pour obtenir un pneumatique performant en comportement, notamment en réponse dynamique sur un effort transversal au véhicule et donc principalement dans l'axe du pneumatique, le pneumatique doit avoir un niveau de rigidité, notamment sous effort transversal, suffisamment élevé. Pour une dimension donnée, la rigidité du pneumatique dépend de la rigidité des différents éléments du pneumatique que sont la bande de roulement, l'armature de sommet, les flancs et les bourrelets. La rigidification de la bande de roulement est traditionnellement obtenue soit à travers la rigidification des matériaux caoutchouteux, soit à travers la diminution de la profondeur de la sculpture ou de la diminution du niveau d'entaillement de la sculpture.

Pour pallier le problème, les fabricants de pneumatiques ont par exemple changé le matériau caoutchouteux en le rigidifiant notamment par des fibres, comme mentionné dans les documents FR 3 014 442 et FR 2 984 230.

Ces solutions ne sont pas toujours satisfaisantes. Diminuer la profondeur sculpture limite la performance en usure et en adhérence sur route mouillée. Rigidifier le matériau caoutchouteux limite les capacités d'adhérence sur sol mouillé et sol sec, et augmente aussi les émissions sonores du pneumatique en roulage. Réduire le volume de creux de la sculpture réduit les capacités d'adhérence sur sol mouillé et plus particulièrement en cas de forte hauteur d'eau au sol. Il est par ailleurs important de maintenir une certaine épaisseur de matériaux caoutchouteux entre la face de fond des découpures, rainures ou sillons et les éléments de renforcement de l'armature de sommet la plus radialement extérieure pour garantir l'endurance du pneumatique.

Des pneumatiques sont décrits dans les documents JP2011031841 et US3225812.

### RESUME DE L'INVENTION

L'objectif principal de la présente invention est d'augmenter la performance en comportement du pneumatique, en améliorant ses performances en adhérence, et plus particulièrement en adhérence sur sol sec, en adhérence sur sol mouillé, en résistance au roulement, sans modifier ses performances en usure et en endurance du sommet.

Cet objectif est atteint par Pneumatique comprenant :
- une bande de roulement destinée à entrer en contact avec un sol par l'intermédiaire d'une surface de roulement, de largeur axiale LSR et une surface de roulement hors épaule, centrée sur le plan circonférentiel médian du pneumatique et d'une largeur axiale LSR' égale à 80% de la largeur axiale LSR de la surface de roulement,
- la surface de roulement hors épaule comprenant des rainures, les rainures formant un espace débouchant sur la surface de roulement et étant délimitées par au moins deux faces latérales principales reliées par une face de fond,
- au moins une rainure de la surface de roulement hors épaule étant sensiblement circonférentielle, appelée sillon circonférentiel ayant une largeur W définie par la distance entre les deux faces latérales, au moins égale à 5 mm et une profondeur D définie par la distance radiale maximale entre la surface de roulement et la face de fond, au moins égale à 4 mm,
- au moins deux nervures dans la surface de roulement hors épaule, possédant chacune au moins une arête de contact définie comme l'intersection entre la nervure et la face latérale du sillon circonférentiel délimitant la nervure,
- chaque nervure de la surface de roulement hors épaule a dans chaque plan méridien du pneumatique un rayon transversal RT,
- le pneumatique comprenant en outre une armature de sommet, radialement intérieure à la bande de roulement, comprenant une armature de travail,
- l'armature de travail comprenant au moins une couche de travail,
- chaque couche de l'armature de sommet s'étendant radialement depuis une surface radialement intérieure (SRI) jusqu'à une surface radialement extérieure (SRE),
- au moins une couche de travail comprenant des éléments de renforcement, continus d'un bord axialement extérieur de la couche de travail au bord axialement extérieur opposé, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°,
- une armature de carcasse radialement intérieure à l'armature de sommet,
- au moins une couche, dite couche ondulée, de l'armature de sommet comprend à l'aplomb d'une nervure, au moins une ondulation, ladite couche de l'armature de sommet comprenant des éléments de renforcement, d'un bord axialement extérieur de la couche de l'armature sommet au bord axialement extérieur opposé,
- la au moins une ondulation de la couche ondulée la plus radialement extérieure est telle que la portion de la couche ondulée la plus radialement extérieure de l'ondulation est radialement extérieure aux points de la couche ondulée la plus radialement extérieure à l'aplomb du centre de la face de fond du sillon le plus proche de ladite ondulation,
- la moins une ondulation de la couche ondulée la plus radialement extérieure est telle qu'à l'aplomb de la nervure où se trouve une ondulation, la distance radiale minimale (do), entre la surface radialement extérieure (SRE) de la couche ondulée la plus radialement extérieure et le point le plus radialement extérieur de la nervure, est inférieure d'au moins 1 mm à la distance radiale (dc) entre la surface radialement extérieure (SRE) de la couche ondulée la plus radialement extérieure et le point le plus radialement extérieur de la nervure, distance à l'aplomb du sillon le plus proche de l'ondulation considérée,
- la distance radiale (da) entre au moins une arrête de contact d'une nervure à l'aplomb de laquelle se trouve une ondulation, et le rayon transversal RT de la nervure considérée hors épaule est au moins égale à 0.2 mm et au plus égale à 2 mm, préférentiellement, au moins égale à 0.5 mm et au plus égale à 1.5 mm, plus préférentiellement au moins égale à 0.8 mm et au plus égale à 1.2 mm,
- la distance radiale (d1) entre la surface radialement extérieure (SRE) de la couche de travail la plus radialement extérieure et la face de fond des sillons circonférentiels, est au moins égale à 1 mm et au plus égale à 6 mm, préférentiellement au moins égale à 2 mm et au plus égale à 4 mm.

Pour améliorer la réponse dynamique sous effort axial, il faut donc rigidifier le pneumatique dans sa composante axiale qui est, pour l'armature de sommet, essentiellement due à la rigidité des couches de travail métalliques et à la distance entre celles-ci et la surface de roulement. En effet les couches de travail métalliques sont rigides en traction et en compression de par leurs matériaux. Elles sont également rigides en cisaillement de par leurs angles avec la direction circonférentielle et leur couplage assuré par la faible épaisseur de matériaux caoutchouteux entre elles.

En revanche les matériaux entre les couches de travail et la surface de roulement travaillent en cisaillement en cas d'effort transversal. Plus l'épaisseur radiale de ces matériaux est importante moins cette partie du sommet est rigide, plus la performance en réponse dynamique sous effort axial diminue. Il faut donc réduire cette distance. Cependant, il faut maintenir la profondeur de sculpture et donc les profondeurs D des rainures et sillons afin de préserver les performances en usure et en adhérence sur sol mouillé du pneumatique.

Par ailleurs il faut préserver la distance radiale (d1), dite profondeur de sous-creux, entre la surface radialement extérieure (SRE) de la couche de travail la plus radialement extérieure et la face de fond du sillon circonférentiel, pour protéger les éléments de renforcement des différentes couches du sommet des perforations. Une solution à ce problème consiste à conserver inchangées la profondeur de sculpture et les profondeurs D des rainures et des sillons et la profondeur de sous-creux (d1) mesurées à l'aplomb des rainures majeures et des sillons, et à diminuer la distance radiale (do) entre la couche de l'armature de sommet la plus radialement extérieure à l'aplomb des nervures.

Compte-tenu du fait que la surface de roulement d'un pneumatique est sensiblement cylindrique, cette solution revient à onduler radialement la couche de l'armature de sommet la plus radialement extérieure, ou plusieurs ou toutes les couches de l'armature de sommet, ou celles-ci et plusieurs ou toutes les couches de l'armature de carcasse, selon des ondulations axiales. Si une couche d'éléments de renforcement a une ondulation, toutes les couches qui lui sont radialement extérieures et qui sont continues d'un bord axial à l'autre de l'armature de sommet, ont selon l'invention une ondulation.

Cette solution va à l'encontre des modes de fabrication des pneumatiques pour lesquels les couches de travail sont posées sur des formes sensiblement cylindriques, de base circulaire et de génératrice une droite perpendiculaire à la base. Les pneumatiques de l'état de la technique présentent après cuisson, dans les plans méridiens, une courbure régulière des couches de travail sans point d'inflexion ou très localisée aux gommes de bordure sur moins de 10% de largeur axiale la couche de travail considérée.

En effet il est courant de découpler très localement certaines couches aux extrémités des éléments de renforcement qui les constituent. Ces couches sont disposées à un rayon sensiblement constant. Pour les pneumatiques selon l'invention, ces couches sont disposées avec des variations de rayons sur une surface minimale pour assurer les avantages escomptés et présentent au moins un point d'inflexion dans le plan méridien.

Disposer des ondulations axiales est la méthode la moins onéreuse avec le type d'outil de fabrication actuel, en temps de cycle, ou en modification de l'outillage. Il convient en effet soit de modifier la génératrice de la forme cylindrique utilisée pour la pose des armatures de carcasse et de sommet, soit de poser des gommes de bourrage circonférentielles.

Par ailleurs, onduler des couches d'éléments de renforcement soumis à des efforts de compression peut sembler sensibiliser le pneumatique à des variations de la géométrie de la surface de roulement dégradant les performances comme la tenue à l'usure irrégulière, le balourd, etc. Néanmoins la solution a de très bonnes performances sur ces critères

De plus onduler des couches d'éléments de renforcement soumis à des efforts de compression va à l'encontre des préconisations pour lutter contre le flambement des structures. En effet, créer une discontinuité de rayon de courbure revient à créer des surcontraintes où pourrait avoir lieu le flambement. Cependant dans le pneumatique, les efforts sont très localisés de sorte qu'une partie du sommet est en tension quand une autre est en compression, à une échelle très inférieure à celle des ondulations. Ainsi les ondulations pratiquées dans les limites de l'invention, ne nuisent pas à l'endurance du pneumatique.

Pour éviter tout problème d'endurance du sommet lié aux chocs lorsque le pneumatique roule sur une route où est présent un obstacle, ou à la fatigue du matériau caoutchouteux en extrémité des éléments de renforcement, il est important que les éléments de renforcement de la couche de travail soient continus d'un bord axialement extérieur de la couche de travail au bord axialement extérieur opposé. Les éléments de renforcement de la couche de travail comportent un ou plusieurs fils métalliques tressés ou non. Il est important que ces fils soient très majoritairement continus dans toute la largeur de la couche de travail de manière à ce que la couche de travail soit elle-même continue.

De manière à générer davantage de rigidité axiale, si seule une couche de frette est ondulée, celle-ci sera continue d'un bord axialement extérieur de la couche de l'armature sommet au bord axialement extérieur opposé.

L'expérience montre que pour améliorer la performance en tenue dynamique sous effort transversal, un des critères suffisant en lui-même est de diminuer la distance (do) entre la surface radialement extérieure (SRE) de la couche ondulée la plus radialement extérieure et la surface de roulement à savoir le point le plus radialement extérieur de la nervure. Ceci permet de réduire les épaisseurs cisaillées de matériaux caoutchouteux de la bande de roulement et de réduire la production de chaleur due à l'hystérèse de ces matériaux. Ces effets sont bénéfiques à la fois vis-à-vis de la rigidité de la bande de roulement qui dépend de la température, et vis-à-vis des performances en résistance au roulement et en endurance. L'ondulation d'au moins une couche de l'armature de sommet permet en plus d'accroitre la rigidité axiale des pneumatiques par l'augmentation de l'inertie de flexion sur chant du sommet, ce qui induit une amélioration sensible de la performance en comportement. Par ailleurs, dans certains pneumatiques, le sommet ne comprend qu'une seule couche de travail et l'invention fonctionne également dans ce cas.

Cette distance (do) est diminuée en créant au moins une ondulation dans une couche de l'armature de sommet, de sorte que cette ondulation ou partie ondulée de la couche de l'armature de sommet soit radialement extérieure à la partie de la couche de travail à l'aplomb du sillon circonférentiel le plus proche de ladite ondulation. Il ne s'agit pas de considérer comme ondulée une couche de l'armature de sommet non ondulée mais respectant le critère de la diminution de la distance (do) par une diminution de la profondeur de sculpture sur une zone donnée. Cette caractéristique est par ailleurs connue notamment pour des pneumatiques pour des véhicules de tourisme dont la profondeur sculpture est plus faible sur les bords axialement extérieurs du pneumatique, dites épaules, que dans les sillons les plus proches. Dans les pneumatiques selon l'état de la technique, dans la partie aux épaules où la distance radiale (do) diminue, la couche de travail est soit à une distance constante de l'axe du pneumatique, soit radialement intérieure aux parties de la même couche de travail à l'aplomb du sillon circonférentiel le plus proche.

Pour pallier ce problème, on ne considère que la partie du sommet et de la bande de roulement hors épaule et la surface de roulement hors épaule c'est-à-dire comprise de part et d'autre du plan équateur du pneumatique et représentant 80% de la largeur axiale respectivement de la bande de roulement et de la surface de roulement.

L'invention fonctionne également en positionnant une ou des ondulations dans une ou des parties d'une ou des épaules du pneumatique.

Le sous-creux (d1) doit être conservé dans les rainures majeures et les sillons circonférentiels. Les rainures mineures ou les incisions sont moins sensibles aux perforations et agressions par des obstacles, car elles sont protégées par le matériau caoutchouteux leur donnant leur caractéristique technique de rainure de faible profondeur ou de faible largeur.

Pour une performance optimale en perforation et agression du sommet, sans pénaliser la résistance au roulement, la distance radiale (d1) entre la surface radialement extérieure (SRE) de la couche de travail la plus radialement extérieure et la face de fond des sillons circonférentiels, est au moins égale à 1 mm et au plus égale à 6 mm, préférentiellement au moins égale à 2 mm et au plus égale à 4 mm. En deçà de limites inférieures, le pneumatique pourrait être trop sensible aux agressions. Au-delà des limites supérieures, la résistance au roulement du pneumatique serait pénalisée.

Les couches de faibles rigidités, proportionnellement aux couches de travail, comme les couches de protection, métalliques ou non, les couches de frette, comportant des éléments de renforcement formant, avec la direction circonférentielle (XX') du pneumatique, un angle B au plus égal à 10° en valeur absolue, n'ont pas les rigidités en compression et en cisaillement suffisantes, en raison de leurs matériaux parfois textile, de leurs angles de pose, pour qu'une ondulation seulement de ces dernières, apporte au problème une solution au même niveau d'efficacité que pour l'ondulation d'une couche de travail.

Certes une telle couche de sommet n'a pas la rigidité axiale de par son orientation et le matériau des éléments de renforcement qui la constituent, d'une couche de travail mais cette rigidité axiale est supérieure à celle des matériaux de la bande de roulement. Donc un pneumatique pour lequel la distance radiale do entre la couche de frette ou de protection mesurée à l'aplomb des rainures majeures et des sillons et la surface de roulement (ou le point le plus radialement extérieur de la nervure considérée) est inférieure à la distance radiale dc entre la couche de frette, respectivement de protection, et la surface de roulement (ou le point le plus radialement extérieur de la nervure considérée) à l'aplomb des nervures, a une rigidité axiale améliorée. C'est donc une possibilité de l'invention même si la simple ondulation de la couche de frette ou de protection sans onduler la couche de travail la plus radialement extérieure est moins intéressante du point de vue du résultat que la configuration où au moins une des couches de travail est ondulée.

Ces couches de protection ou de frette sont optionnelles dans un pneumatique et ne conditionnent pas l'intérêt de la solution. Ces couches de l'armature de sommet étant généralement extérieures radialement aux couches de travail, l'ondulation d'une couche de travail implique selon l'invention d'onduler les couches de frette ou de protection, si celles-ci sont continues d'un bord axial à l'autre de l'ondulation.

Il apparaît qu'une ondulation d'une couche de l'armature de sommet et préférentiellement d'une couche de travail, à l'aplomb d'une seule nervure, par exemple centrale et symétrique par rapport au plan circonférentiel médian, est suffisante pour amener un gain de performance mesurable en dynamique sous effort transversal. Cette solution peut avoir un avantage en termes d'usure irrégulière, ou de valeur de poussée axiale en fonction du sens de la poussée en fonction du carrossage du véhicule. Néanmoins cette ondulation unique peut également se situer sous une nervure quelconque et notamment sous une des nervures les plus radialement extérieures. Ces choix peuvent être faits en tenant compte de l'aspect directionnel ou axisymétrique des pneumatiques et du carrossage du véhicule auquel le pneumatique est destiné.

L'amplitude de cette ondulation doit être au moins égale à 1 mm, pour avoir des effets significatifs à l'échelle du pneumatique, ainsi la distance radiale (do) entre la surface radialement extérieure (SRE) de la couche ondulée la plus radialement extérieure et le point le plus radialement extérieur de la nervure est inférieure d'au moins 1 mm à la distance radiale (dc) entre la surface radialement extérieure (SRE) de la couche ondulée la plus radialement extérieure et le point le plus radialement extérieur de la nervure, distance à l'aplomb du centre de la face de fond du sillon circonférentiel le plus proche de ladite ondulation.

Une telle solution amène une modification de la répartition des pressions dans l'aire de contact conduisant :
- à l'apparition de bruit de chuintement sur des sols fermés, sols peu drainants, n'évacuant pas ou peu les eaux de pluie,
- à diminution de la performance d'adhérence sur sol lisse mouillé,
- à une usure plus rapide des bords des nervures à l'aplomb desquelles se trouve une ondulation, amenant à une dégradation de la durée de vie en usure de la solution par rapport à l'usure optimale.

Suivant l'état de la technique, les points de la surface de roulement d'une nervure dans un méridien, aux variations de fabrication près suivent un rayon transversal RT, sensiblement parallèle à celui des couches de l'armature de sommet. Sans ondulation, une nervure s'écrase de manière homogène dans l'aire de contact, chaque point de la nervure étant à égale distance des couches de l'armature de sommet. Pour un pneumatique gonflé - à savoir ayant une pression interne au moins égale à 1.1 bar - sous l'effet des tensions méridiennes dû au gonflage, les couches des éléments de renforcement ondulés sont sollicitées en tension. Sous cet effort, l'ondulation perd en amplitude. Les points les plus radialement extérieurs de ces couches se déplacent radialement vers l'axe de rotation du pneumatique d'une distance en rapport à l'amplitude de l'ondulation. Subséquemment les points de la surface de roulement radialement au-dessus des points les plus radialement extérieurs des couches ondulés se déplacement également dans la même direction. A l'inverse les points les plus radialement intérieurs des couches ondulée, à l'aplomb des sillons et donc des faces latérales des nervures, sont animés d'un mouvement radial inverse, à l'opposé de l'axe de rotation du pneumatique. Ainsi les zones autour des points les plus radialement extérieures des nervures, subissent sous l'effet de la pression intérieure du pneumatique une diminution de rayon axial par rapport aux faces latérales des nervures. En raison de ces déplacements spécifiques au gonflage des pneumatiques à sommet ondulé, la mise à plat des nervures n'est pas homogène et donc les vitesses d'usure sont différentes entre le centre et le bord des nervures.

Pour éviter cette diminution de la durée sur usure des nervures, la solution consiste à décaler radialement les faces latérales des nervures et notamment leurs arrêtes de contact à un rayon plus faible que le rayon transversal RT de la nervure. Plus l'ondulation du sommet a une amplitude importante, plus les déplacements relatifs sont importants, plus il est nécessaire de compenser les déplacements relatifs des points les plus radialement extérieurs des nervures et des faces latérales des nervures. Pour des ondulations d'amplitude proche de 1 mm, la distance radiale optimale entre une arête de contact définie comme l'intersection entre la nervure et la face latérale du sillon circonférentiel et le rayon transversal RT de la nervure considérée, est au moins égale à 0.2 mm et au plus égale à 0;8 mm ; pour des ondulations d'amplitudes proches de 2,5 mm, cette distance radiale optimale est préférentiellement au moins égale à 0.5 mm et au plus égale à 1.5 mm ; pour des ondulations d'amplitude proche de 5 mm, cette distance radiale optimale est préférentiellement plus préférentiellement au moins égale à 1.2 mm et au plus égale à 2 mm. Un même pneumatique peut pour répondre à certaines contraintes de son cahier des charges, avoir des ondulations sur une même couche d'éléments de renforcement d'amplitudes différentes et donc des distances radiales optimales entre les arêtes de contact des nervures et le rayon transversal RT des nervures, différentes.

La surface de roulement des nervures à l'aplomb desquelles se trouve une ondulation, étant bombées du fait de la géométrie de leurs arêtes de contact, les distances entre la surface de roulement et les couches de l'armature de sommet se prennent à partir du point le plus radialement extérieur de la nervure considérée. La mesure de la profondeur des sillons à l'aide des outils classique se fait à partir de ces mêmes points - les plus radialement extérieurs des nervures à l'aplomb desquelles se trouve une ondulation. En effet ces outils sont conçus de telle façon qu'ils évitent les effets de bords des nervures ainsi décrits.

Cette caractéristique pour une arrête de contact d'une nervure, d'une distance radiale à l'axe de rotation du pneumatique inférieure au rayon RT de la nervure non nulle, permet d'améliorer la performance en durée de vie, néanmoins l'invention est d'autant plus efficace si toutes les arêtes de contact des nervures à l'aplomb desquelles se trouve une ondulation d'au moins une couche de l'armature de sommet, possèdent cette caractéristique. Cette caractéristique peut être identique pour l'ensemble des nervures ou fonction des caractéristiques des différentes ondulations des couches de l'armature de sommet à l'aplomb des différentes nervures.

Cette caractéristique pour une arrête de contact d'une nervure, d'une distance radiale à l'axe de rotation du pneumatique inférieure au rayon RT de la nervure non nulle, est mesurée sur pneumatique libre, non monté sur une jante, non gonflé.

La courbe de jonction entre l'arête de contact de la nervure et le rayon transversal RT de la nervure peut prendre différentes formes. La forme préférée est une courbe continument variable (spline) qui de par sa continuité permettra un réglage optimal de l'usure de cette zone de la nervure. Il est également préféré de joindre l'arête de contact au rayon transversal RT de la nervure :
- par des arrondis d'un rayon au moins égal à 2 mm et au plus égal à 8 mm
- par des chanfreins formant un angle avec le RT au moins égal à 10° et au plus égal à 45° sur une longueur axiale au moins égale à 2 et au plus égale à 10 mm.
- Par une courbe linéaire par morceau.

A noter que ce type de conception des arêtes de contact dans des pneumatiques non munis d'ondulation génère de l'usure irrégulière des nervures avec une usure plus importante au centre qu'aux bords des nervures.

Préférentiellement à l'aplomb d'au moins une nervure de la surface de roulement où se trouve une ondulation, la distance radiale minimale (do) entre la surface radialement extérieure (SRE) de la couche ondulée la plus radialement extérieure et le point le plus radialement extérieur de la nervure considéré est inférieure d'au moins 1.5 mm, préférentiellement 2 mm, à la distance radiale (dc) entre la surface radialement extérieure de la couche ondulée la plus radialement extérieure et le point le plus radialement extérieur de la nervure considéré, distance à l'aplomb du sillon circonférentiel le plus proche de l'ondulation considérée. Les paramètres de conception permettant le réglage de la dynamique sous effort transverse important, au moins de l'ordre de 50% de la charge nominale du pneumatique, sont :
- Le nombre de nervures et le nombre et la dimension radiale des ondulations de la couche de travail la plus radialement extérieure. Plus l'ondulation est étendue axialement plus le pneumatique est rigide sous effort transversal, et plus il est performant en résistance au roulement. Une seule nervure peut représenter 15% de la largeur axiale de la couche de travail la plus radialement extérieure. Il est courant d'avoir 3, 4, 5 nervures et que les sillons représentent autour de 20% de cette largeur.
- L'amplitude de l'ondulation est au moins égale à 1 mm mais limitée à 5 mm en raison des rayons de courbures à imposer aux couches de travail métalliques, rigides et donc peu déformables.

Une solution préférée est donc qu'à l'aplomb d'au moins une nervure de la surface de roulement où se trouve une ondulation, la distance radiale (do) entre la surface radialement extérieure (SRE) de la couche ondulée la plus radialement extérieure et le point le plus radialement extérieur de la nervure considérée est inférieure de la nervure d'au plus 5 mm, préférentiellement d'au plus 3 mm, à la distance radiale (dc) entre la surface radialement extérieure (SRE) de la couche ondulée la plus radialement extérieure et le point le plus radialement extérieur de la nervure considérée, distance à l'aplomb du sillon circonférentiel le plus proche de l'ondulation considérée.

Il est avantageux qu'une ondulation de la couche ondulée et préférentiellement de la couche de travail la plus radialement extérieure soit présente à l'aplomb de toutes les nervures de la surface de roulement afin d'amener l'avantage de la solution à son optimum.

Une solution préférée est qu'une ondulation de la couche ondulée et préférentiellement de la couche de travail la plus radialement extérieure est présente uniquement à l'aplomb des nervures de la surface de roulement les plus proches axialement du plan circonférentiel médian, de part et d'autre de ce plan, afin d'obtenir une performance juste nécessaire par rapport à l'augmentation du coût de fabrication qu'amène l'ondulation de la couche de travail la plus radialement extérieure.

Il est avantageux que la bande de roulement, par exemple dans une rainure ou un sillon circonférentiel de la bande de roulement, comprenne au moins un témoin d'usure, et que la distance radiale minimale (du) entre la surface radialement extérieure (SRE) de la couche la plus radialement extérieure de l'armature de sommet et le point le plus radialement extérieur de la nervure considérée soit au moins égale à la distance radiale (df) entre la surface de roulement et le point le plus radialement extérieur du témoin d'usure. En effet, il est important que l'utilisateur puisse percevoir que le pneumatique est usé, grâce au témoin d'usure et cela avant de voir les éléments de renforcement de la couche la plus radialement extérieure de l'armature de sommet apparaître au niveau de la surface de roulement. Cette dernière n'est pas obligatoirement ondulée si elle est discontinue et déposée uniquement sous les nervures et non sous les sillons.

Avantageusement la distance radiale minimale (du) entre la surface radialement extérieure (SRE) de la couche la plus radialement extérieure de l'armature de sommet et la surface de roulement est au plus égale à la profondeur D du sillon circonférentiel le plus proche augmentée de 4 mm et au moins égale à la profondeur D du sillon circonférentiel le plus proche diminuée de 2 mm. Cette solution permet un positionnement idéal de la couche d'éléments de renforcement la plus radialement extérieure de l'armature de sommet par rapport à la surface de roulement. Cette dernière n'est pas obligatoirement ondulée si elle est discontinue et déposée uniquement sous les nervures et non sous les sillons. La distance radiale minimale (du) entre la surface radialement extérieure (SRE) de la couche la plus radialement extérieure de l'armature de sommet et la surface de roulement, est forcément mesurée sur la portion radialement extérieure de l'armature sommet, donc au niveau d'une ondulation.

Préférentiellement la profondeur D d'une rainure majeure ou d'un sillon circonférentiel est au moins égale à 4 mm, et au plus égale à 20 mm. Les profondeurs de sculpture au moins égales à 4 mm et au plus égales à 9 mm, préférentiellement au moins égale à 6 mm, et au plus égale à 8 mm, permettent un bon compromis entre les performances en usure et en résistance au roulement dans de nombreux pneumatiques de tourisme. Les profondeurs de sculpture au moins égales à 8 mm et au plus égales à 20 mm sont intéressantes pour les mêmes compromis dans les pneumatiques pour véhicules portant de lourdes charges. L'invention n'est pas limitée à des pneumatiques d'un usage particulier.

Avantageusement au rayon du point le plus axialement extérieur du pneumatique, la distance axiale dg entre la couche de renforts la plus axialement intérieure et le point le plus axialement intérieur à ce rayon, est au plus égale à 7 mm préférentiellement au plus égale à 4 mm. Cette distance dg désigne a *minima* l'épaisseur des mélange, caoutchouteux ou autres, intérieurs à la couche de carcasse la plus radialement intérieure au niveau du flanc du pneumatique. Dans des architectures particulières, cette couche de renfort assure une autre fonction que la couche de carcasse. Ces mélanges ont pour fonction d'assurer l'étanchéité du pneumatique et parfois d'éviter l'oxydation de la couche de carcasse. Certains pneumatiques ont des épaisseurs de mélanges intérieurs supérieures à 7 mm, notamment pour permettre le roulage du pneumatique à une pression nulle. Ce type de pneumatique n'est pas optimisé pour l'objectif de l'invention de gain de masse et de résistance au roulement.

Dans le cas où la couche d'éléments de renforcement la plus radialement extérieure est une couche de frette, il est avantageux que la couche d'éléments de renforcement la plus radialement extérieure de l'armature de sommet comprenne des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

Une couche de frette contenant un polyamide aromatique permet d'obtenir une meilleure stabilité de la géométrie de la couche de frette et donc de la géométrie de la surface de roulement dans le temps et sous les efforts de centrifugation subi par le pneumatique lors de son utilisation et donc un meilleur contrôle de la forme d'usure dans la largeur des nervures.

Une solution préférée est qu'au moins une gomme de bourrage ayant une épaisseur radiale au moins égale à 0.3 mm est positionnée à l'aplomb de toute ondulation de la couche ondulée la plus radialement extérieure. Ceci afin de permettre l'ondulation des couches à la fabrication et à la cuisson. Il est possible de disposer plusieurs gommes de bourrage à l'aplomb de la ou des ondulations à différentes valeurs de rayons avec différentes propriétés en fonction du cahier des charges du pneumatiques. Si une seule gomme de bourrage est disposée, son épaisseur maximale est approximativement égale, pour une ondulation donnée, à la distance radiale entre le point le plus radialement extérieur de la surface radialement extérieure de la couche ondulée la plus radialement extérieure au niveau de l'ondulation et la surface radialement extérieure de la couche ondulée la plus radialement extérieure à l'aplomb du centre de la face de fond de la rainure majeure la plus proche de ladite ondulation.

Il est avantageux que, la bande de roulement étant constituée par un mélange caoutchouteux, la gomme de bourrage, disposée à l'aplomb de la ou des ondulations, soit un mélange caoutchouteux ayant une perte dynamique tanδ1, mesurée à une température de 23°C et sous une contrainte de 0.7 MPa à 10 Hz, au plus égale et préférentiellement inférieure de 30% à la perte dynamique tanδ2 du matériau caoutchouteux constitutif de la bande de roulement, mesurée à une température de 23°C et sous une contrainte de 0.7 MPa à 10 Hz. Pour un matériau de bourrage de même hystérèse, le gain en résistance au roulement est donné seulement par la diminution des sollicitations en cisaillement que ce matériau subit. Le matériau de bourrage ne subissant pas les mêmes contraintes que le matériau caoutchouteux constitutif de la bande de roulement, il est possible de modifier ses caractéristiques de manière à améliorer davantage la résistance au roulement. 30% de baisse d'hystérèse amène un gain significativement plus élevé pour l'invention.

Il est préféré que l'armature de sommet consiste en 2 couches de travail ayant des angles opposés et une couche de frette.

Avantageusement les gommes de bourrage à l'aplomb des ondulations sont radialement intérieures à toutes les couches de travail de l'armature de travail de sorte que les couches de travail ne soient découplées en aucun point du sommet par ces gommes de bourrage. Cette disposition garantit une rigidité transversale du sommet élevée.

Afin de ne pas créer de rayons de courbure trop importants sur l'armature de carcasse pouvant générer localement du flambement en raison des efforts de compression que l'armature de carcasse subit, une solution est de disposer les gommes de bourrage à l'aplomb des ondulations, radialement à l'extérieur des couches de carcasse constituant l'armature de carcasse. Dans cette configuration, la ou les couches de carcasse sont continument décroissantes dans un plan méridien, depuis le plan circonférentiel médian jusque aux bords axiaux de l'armature de sommet.

Pour des économies de matière notamment il est possible de créer des ondulations sur l'ensemble des couches de sommet et de l'armature de carcasse sans gomme de bourrage notamment lors de la cuisson à l'aide d'un moule à noyau dur apte à générer des ondulations.

### BREVE DESCRIPTION DES DESSINS

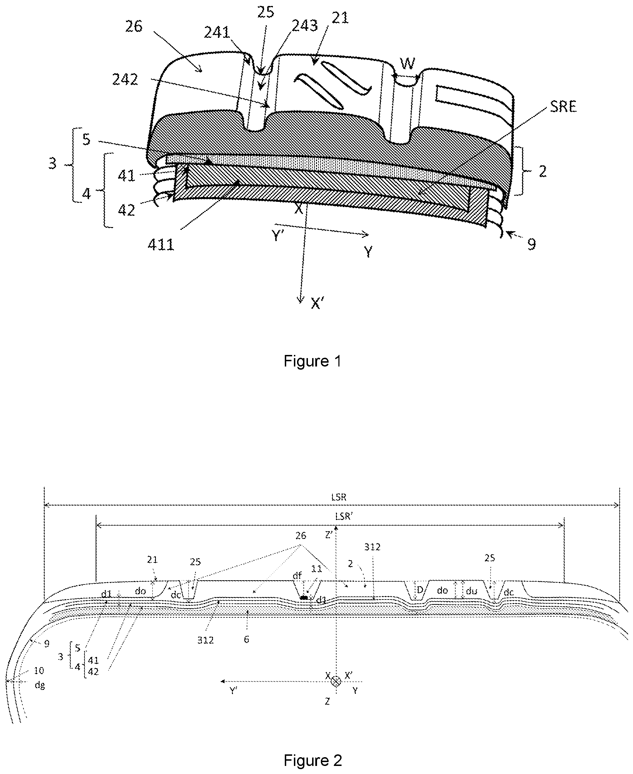

Les caractéristiques et autres avantages de l'invention seront mieux compris à l'aide des figures 1 à 5, les dites figures n'étant pas représentées à l'échelle mais de façon simplifiée, afin de faciliter la compréhension de l'invention :
- La figure 1 est une partie de pneumatique, en particulier son architecture, sa bande de roulement (2) et un sillon circonférentiel (25) et une nervure (26).
- la figure 2 représente une coupe méridienne du sommet d'un pneumatique selon l'invention avec une ondulation (312) sous une nervure (26) et illustre les différentes distances radiales do, d1, D, du, dc, dg, df et une gomme de bourrage (6) propre à créer au moins une ondulation (312) de la couche de travail la plus radialement extérieure. La figure 2 représente également la largeur axiale de la surface de roulement LSR et la largeur axiale de la surface de roulement hors épaule LSR'.

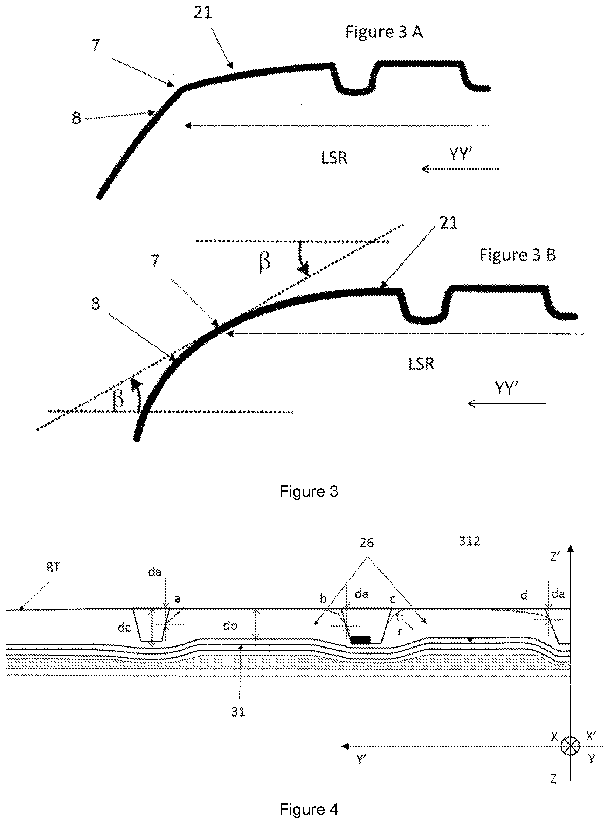

- Les figures 3A et 3B présentent deux types de profils méridiens radialement extérieurs de la bande de roulement d'un pneumatique de tourisme et la détermination de la largeur axiale LSR de la surface de roulement.
- La figure 4 représente une coupe méridienne du sommet d'un pneumatique selon l'invention avec une ondulation (312) sous 3 nervures (26), et la distance radiale da entre certaines arrêtes de contact de nervures (26) à l'aplomb de laquelle se trouve une ondulation, et le rayon transversal RT de la nervure considérée. La figure 4 représente plusieurs formes a, b, c, d de raccordement des arrêtes de contact de nervures (26) et le rayon transversal RT de la nervure considérée.

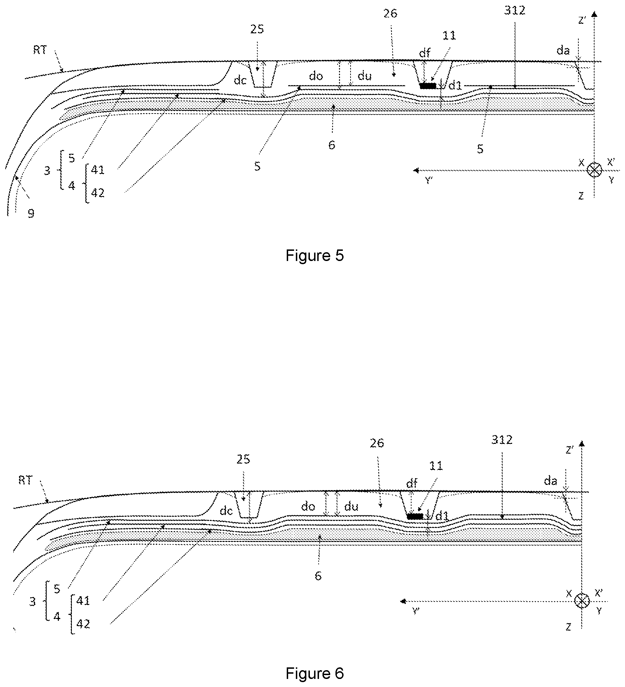

- la figure 5 représente une coupe méridienne du sommet d'un pneumatique selon l'invention avec une ondulation (312) sous les nervures (26), les gommes de bourrages (6) étant toutes radialement intérieures aux couches de travail (41 et 42) et radialement extérieure à la couche de carcasse (9), une frette (5) étant disposée par morceau radialement extérieure à la couche de travail la plus radialement extérieure (41).
- la figure 6 représente une demi-section d'un pneumatique avec une solution optimale de l'invention. L'ondulation 312 est présente sur l'ensemble des nervures. L'amplitude de l'ondulation est de 2 mm sur les nervures centrales et de 1mm au niveau des épaules. La distance da est comprise entre 0.4 mm et 0.8 mm selon les nervures considérées.

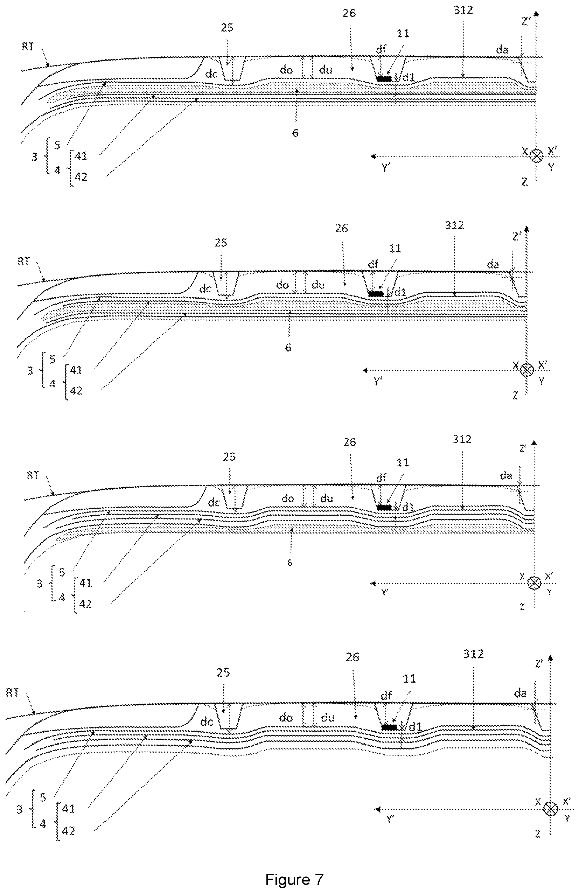

- la figure 7 représente différentes versions avec de haut en bas :
   ∘ seule la couche de frette 5 est ondulée en utilisant des gommes de bourrage,
   ∘ La couche de travail 41 et la couche de frette 5 sont ondulées en utilisant des gommes de bourrage,
   ∘ La couche de carcasse 9, les couches de travail 41 et 42 et la couche de frette 5 sont ondulées en utilisant des gommes de bourrage,
   ∘ La couche de carcasse 9, les couches de travail 41 et 42 et la couche de frette 5 sont ondulées sans utiliser des gommes de bourrage,

De nombreuses combinaisons d'agencement et de dimension des ondulations sous les nervures, sont possibles. Les figures et la description ne sauraient toutes les décrire explicitement.

### DESCRIPTION DETAILLEE DES DESSINS

La figure 1 représente une vue en perspective d'une partie du sommet d'un pneumatique. A chaque plan méridien est associé un repère cartésien (XX', YY', ZZ'). Le pneumatique comporte une bande de roulement 2 destinée à entrer en contact avec un sol par l'intermédiaire d'une surface de roulement 21. Dans la bande de roulement, sont disposées des rainures et des sillons circonférentiels 25 de largeur W possiblement différentes d'un sillon à l'autre, ayant chacune des profils principaux 241 et 242 et une face de fond 243. Le pneumatique comprend en outre une armature de carcasse 9 constituée ici d'une couche de carcasse (9), une armature de sommet 3 comprenant une armature de travail 4 et ici pour l'exemple, une armature de frettage 5. L'armature de travail comprend au moins une couche de travail et ici pour l'exemple deux couches de travail 41 et 42 comprenant chacune des éléments de renforcement parallèles entre eux. Est représentée également la surface radialement extérieure SRE de la couche de travail 41 la plus radialement extérieure.

La figure 2 représente schématiquement une coupe méridienne du sommet du pneumatique selon l'invention. Elle illustre en particulier une ondulation de la couche de travail la plus radialement extérieure 41 et 42 et une gomme de bourrage 6 disposée à l'aplomb de la couche 42. La figure 2 illustre également les distances radiales suivantes :
- D : la profondeur d'une rainure, distance radiale maximale entre la surface de roulement 21 et la face de fond 243 du sillon circonférentiel 25.
- dc : distance radiale entre la surface radialement extérieure SRE de la couche ondulée la plus radialement extérieure (ici la couche de frette 5) et le point le plus radialement extérieur de la nervure (26), distance à l'aplomb du centre de la face de fond 243 du sillon circonférentiel 25 la plus proche de ladite ondulation 312.
- do : la distance radiale entre la surface radialement extérieure SRE de la couche ondulée la plus radialement extérieure et le point le plus radialement extérieur de la nervure (26) au niveau de l'ondulation 312.
- du : la distance radiale minimale entre la surface radialement extérieure (SRE) de la couche la plus radialement extérieure de l'armature de sommet 3 et la surface de roulement 21. Ici do est égal à du.
- d1 : la distance radiale entre la surface radialement extérieure SRE de la couche de travail la plus radialement extérieure 41 et la face de fond 243 des sillons circonférentiels 25.
- dg : au rayon du point 10 le plus axialement extérieur du pneumatique, la distance axiale entre la couche de renforts la plus axialement intérieure (ici l'armature de carcasse 9) et le point le plus axialement intérieur à ce rayon.
- df : la distance radiale entre la surface de roulement 21 et le point le plus radialement extérieur du témoin d'usure 11.

Sur les figures 3A et 3B, on détermine les bords axiaux 7 de la bande de roulement qui permettent de mesurer la largeur de la surface de roulement LSR. Dans la figure 3A où la surface de roulement 21 est sécante avec la surface axiale extérieure du pneumatique 8, le bord axial 7 est trivialement déterminé par l'homme de l'art. Dans la figure 3B où la surface de roulement 21 est continue avec la surface axiale extérieure du pneumatique 8, on trace, sur une coupe méridienne du pneumatique, la tangente à la surface de roulement en tout point de ladite surface de roulement dans la zone de transition vers le flanc. Le premier bord axial 7 est le point pour lequel l'angle β (beta) entre ladite tangente et une direction axiale YY' est égal à 30°. Lorsqu'il existe plusieurs points pour lesquels l'angle β entre ladite tangente et une direction axiale YY' est égal à 30°, on retient le point radialement le plus à l'extérieur. On procédera de la même manière pour déterminer le second bord axial de la bande de roulement.

La figure 4 représente schématiquement la coupe méridienne du sommet d'un pneumatique selon l'invention. Dans un pneumatique suivant l'état de la technique, les couches de sommet ne contiennent pas d'ondulation et les points d'une nervure de la surface de roulement hors épaule suivent sensiblement leur rayon transversal RT que l'homme de l'art peut déterminer à l'aide de gabarits ou de relevés de mesure au laser par exemple, sur le pneumatique libre. Le rayon transversal RT d'une nervure est le rayon d'une portion du cercle de plus grand diamètre contenu dans le plan méridien considéré passant par le point le plus radialement extérieur de la nervure considérée et les points les plus radialement extérieurs des deux nervures de la surface de roulement hors épaule, les plus proches axialement de la nervure considérée. Pour la nervure la plus radialement extérieure, la mesure sera faite avec les points les plus radialement extérieurs des deux nervures les plus proches mais toutes deux radialement intérieures à la nervure considérée. Pour un pneumatique n'ayant que deux nervures, le cercle sera pris tangent à la surface de roulement au point le plus radialement extérieur de la nervure considérée.

Pour éviter des problèmes d'usure les arêtes de contact des nervures sont sensiblement au niveau du rayon RT pour un pneumatique selon l'état de la technique hors objectif particulier au détriment de la performance en usure.

Les couches de sommet représentées Figure 4, contiennent des d'ondulations et la majorité des points de la surface de roulement hors épaule suivent sensiblement les rayons transversaux RT des nervures que l'homme de l'art peut déterminer à l'aide de gabarit ou de relevés de mesure au laser par exemple sur pneumatique libre. Pour éviter des problèmes d'usure les arêtes de contact des nervures sont radialement intérieures au rayon RT de la nervure, à une distance radiale da.

La position de l'arête de contact est déterminée par l'homme de l'art. en traçant, sur un relevé des points extérieurs d'un méridien du pneumatique à l'état libre ou sur une coupe méridienne positionnée comme à l'état libre, la tangente à la surface de roulement en tout point de ladite surface de roulement dans la zone de transition entre le sillon et la nervure . l'arrête de contact est le point pour lequel l'angle entre ladite tangente et le rayon transversal RT est égal à 45°. Lorsqu'il existe plusieurs points pour lesquels le dit angle est égal à 45°, on retient le point le plus axialement éloigné du centre de la nervure.

La figure 4 illustre plusieurs modes de raccordement entre l'arête de contact et le rayon transversal RT soit par :
- a : par un chanfrein
- b : par une courbe linéaire par morceau
- c : par un arrondi
- d : par une courbe continument variable (spline)

La figure 5 représente une coupe méridienne du sommet d'un pneumatique selon l'invention avec une ondulation sous certaines nervures (26), une frette, constituée d'au moins une couche de frette, étant disposée par morceau radialement extérieure à la couche de travail la plus radialement extérieure (41) de sorte qu'en ce cas la distance radiale do n'est pas égale à la distance radiale du. Il est également possible de poser une frette ou une couche de protection selon deux « couches », une première couche ondulée, continue d'un bord axial à l'autre du pneumatique et une couche par morceau comme illustré sur la figure 5, seulement présente à l'aplomb d'une ou des nervures.

la figure 6 représente une demi-section d'un pneumatique avec une solution optimale de l'invention. L'ondulation des couches (41, 42, 5) est présente sur l'ensemble des nervures.
- L'amplitude de l'ondulation sur les nervures du centre est de 2mm (dc-do =2 mm).
- L'amplitude de l'ondulation est de 1mm.
- La profondeur D des sillons principaux est de 7.5 mm,
- la distance d1 est comprise entre 2.5mm et 3mm à l'aplomb des sillons principaux.
- La distance radiale du est inférieure à D +1.5mm et est supérieure à D-2mm. La distance du est supérieure à df.
- La distance da est comprise entre 0.4mm et 0.8mm selon les nervures considérées.

Une coupe méridienne du pneumatique est obtenue par découpage du pneumatique selon deux plans méridiens. Cette coupe sert à déterminer les différentes distances radiales, le centre des faces de fond des rainures et des sillons.

L'invention a été réalisée sur un pneumatique A de dimension 305/30 ZR20 destiné à équiper un véhicule de tourisme. Les profondeurs D des rainures de la sculpture sont comprises entre 4 et 7 mm et égale à 7 mm pour les sillons circonférentiels, pour des largeurs W variables pour les rainures et égales à 15 mm pour les sillons. L'armature sommet est composée de deux couches de travail dont les éléments de renforcement font un angle de + ou - 38° avec la direction circonférentielle et d'une couche de frette dont les éléments de renforcement font un angle de + ou - 3° avec la direction circonférentielle. Les éléments de renforcement de la couche de travail, sont des câbles métalliques continus.

Au rayon du point 10 le plus axialement extérieur du pneumatique, la distance axiale dg entre la couche de renforts la plus axialement intérieure, la couche de carcasse, et le point le plus axialement intérieur à ce rayon est égale à 4 mm pour tous les pneumatiques.

La couche de travail la plus radialement extérieure est ondulée sous les 5 nervures de la bande de roulement. La distance radiale (do) entre la surface radialement extérieure (SRE) de la couche ondulée, ici une couche de frette (5), la plus radialement extérieure et la surface de roulement est inférieure de 2 mm à la distance radiale (dc) entre la surface radialement extérieure (SRE) de la couche ondulée la plus radialement extérieure et la surface de roulement, distance à l'aplomb du centre de la face de fond (243) du sillon circonférentiel (25) le plus proche de l'ondulation pour les 3 nervures axialement intérieures et de 1 mm pour les 2 nervures les plus axialement intérieures. De même la largeur axiale des ondulations est égale à 21 mm pour les 3 nervures axialement intérieures et égale à 7 mm pour les 2 nervures les plus axialement extérieures. La distance radiale (d1) entre la surface radialement extérieure (SRE) de la couche de travail la plus radialement extérieure (41) et la face de fond (243) des sillons circonférentiels (25), est comprise entre 2 mm et 3,5 mm.

Toutes les nervures sont telles que leurs arrêtes de contact ont une distance radiale da avec le rayon transversal RT du pneumatique égale à 1 mm. Le raccordement des arêtes aux rayons transversaux des nervures est effectué par une courbe continument variable.

Les ondulations sont créées à l'aide de gommes de bourrages disposées à l'aplomb des 5 nervures de la bande de roulement. Ces gommes de bourrage sont radialement extérieures à la couche de carcasse et radialement intérieures aux deux couches de travail assurant par cette disposition une géométrie plane sous le sommet, optimale de la couche de carcasse et un couplage optimal des dites couches de travail.

Les pneumatiques A ont été comparés avec les pneumatiques B de même dimension, possédant les mêmes caractéristiques à cela près que les arrêtes de leurs nervures ne sont pas adaptées à l'ondulation du sommet tel que le mentionne l'invention et avec les pneumatiques C de même dimension, possédant les mêmes caractéristiques à cela près que les couches de travail n'étaient pas ondulées et les arêtes de contact sont sensiblement confondues avec le rayon transversal RT. Les pneumatiques A sont selon l'invention, les pneumatiques B sont selon une invention non optimisée, les pneumatiques sont selon l'état de la technique.

Le mélange de bourrage utilisé pour créer les ondulations, a une perte dynamique tanδ1, mesurée à une température de 10°C et sous une contrainte de 0.7 MPa à 10 Hz, inférieure de 60% à celle du matériau caoutchouteux constitutif de la bande de roulement.

Le gain en résistance au roulement a été évalué sur une machine standard pour des mesures normalisées ISO 2850 :2009. Les tests montrent un gain de plus 10% pour les pneumatiques A et B par rapport au pneumatique C de référence.

Par ailleurs, une mesure de la caractéristique Dz du modèle de comportement des pneumatiques, dit Pacejka, bien connue de l'homme de l'art, montre une augmentation de cette caractéristique pour une pression à 2.6b à chaud de 13%. Le gain en adhérence sol sec varie entre 1 et 5% selon les conditions de sollicitation pour les pneumatiques A et B par rapport au pneumatique C de référence.

Les pneumatiques ont également été montés sur un véhicule de type sportif et testés sur un circuit virageux propre à générer des efforts de transversaux importants. Un pilote professionnel, formé à l'évaluation des pneumatiques, compare les pneumatiques A selon l'invention et les pneumatiques B et C selon l'état de la technique et suivant un processus d'essais rigoureux, dans les mêmes conditions de température, de condition de sol de roulage, sans connaître les caractéristiques des pneumatiques testés, en répétant la mesure. Le pilote note les pneumatiques. Dans tous les essais effectués, les pneumatiques A selon l'invention et B surclasse les pneumatiques C en terme de comportement véhicule, tenue de route, sur sol sec et en terme d'adhérence. Par ailleurs la performance de comportement est plus constante au cours d'un test de comportement sur véhicule avec un pneumatique selon l'invention qu'avec un pneumatique selon l'état de la technique. En revanche les pneumatiques B montrent:
- l'apparition de bruit de chuintement sur des sols fermés,
- une baisse de la performance d'adhérence sous forte hauteur d'eau sur sol lisse,
- une usure plus rapide des bords des nervures amenant à une dégradation de la durée de vie en usure de la solution.

Le pneumatique A conserve les performances du pneumatique C sur ces performances. L'amélioration de la rigidité axiale et l'absence d'usure des nervures amènent qui plus est un gain de 10% en usure sur un usage doux sur route ouverte sur 10 000 km.

## Revendications

1. Pneumatique pour véhicule comprenant :
• une bande de roulement (2) destinée à entrer en contact avec un sol par l'intermédiaire d'une surface de roulement (21), de largeur axiale LSR et une surface de roulement hors épaule, centrée sur le plan circonférentiel médian du pneumatique et d'une largeur axiale LSR' égale à 80% de la largeur axiale LSR de la surface de roulement,
• la surface de roulement hors épaule comprenant des rainures, les rainures formant un espace débouchant sur la surface de roulement (21) et étant délimitées par au moins deux faces latérales principales (241, 242) reliées par une face de fond (243),
• au moins une rainure de la surface de roulement hors épaule étant sensiblement circonférentielle, appelée sillon circonférentiel (25) ayant une largeur W définie par la distance entre les deux faces latérales (241, 242), au moins égale à 5 mm et une profondeur D définie par la distance radiale maximale entre la surface de roulement (21) et la face de fond (243), au moins égale à 4 mm,
• au moins deux nervures (26) dans la surface de roulement hors épaule, possédant chacune au moins une arête de contact définie comme l'intersection entre la nervure et la face latérale du sillon circonférentiel (25), délimitant la nervure,
• le pneumatique (1) comprenant en outre une armature de sommet (3), radialement intérieure à la bande de roulement (2), comprenant une armature de travail (4),
• l'armature de travail (4) comprenant au moins une couche de travail (41, 42),
• chaque couche de l'armature de sommet s'étendant radialement depuis une surface radialement intérieure (SRI) jusqu'à une surface radialement extérieure (SRE),
• au moins une couche de travail (41 ou 42) comprenant des éléments de renforcement (411), continus d'un bord axialement extérieur de la couche de travail au bord axialement extérieur opposé, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°,
• une armature de carcasse (9) radialement intérieure à l'armature de sommet, au moins une couche (41, 42, 5), dite couche ondulée, de l'armature de sommet (3) comprend à l'aplomb d'une nervure (26), au moins une ondulation (312), ladite couche de l'armature de sommet comprenant des éléments de renforcement, d'un bord axialement extérieur de la couche de l'armature sommet au bord axialement extérieur opposé,
la au moins une ondulation (312) de la couche ondulée la plus radialement extérieure est telle que la portion de la couche ondulée la plus radialement extérieure de l'ondulation (312) est radialement extérieure aux points de la couche ondulée la plus radialement extérieure à l'aplomb du centre de la face de fond (243) du sillon (25) le plus proche de ladite ondulation (312),
la distance radiale (d1) entre la surface radialement extérieure (SRE) de la couche de travail la plus radialement extérieure (41) et la face de fond (243) des sillons circonférentiels (25), est au moins égale à 1 mm et au plus égale à 6 mm, préférentiellement au moins égale à 2 mm et au plus égale à 4 mm,
la au moins une ondulation (312) de la couche ondulée la plus radialement extérieure est telle qu'à l'aplomb de la nervure (26) où se trouve une ondulation (312), la distance radiale minimale (do), entre la surface radialement extérieure (SRE) de la couche ondulée la plus radialement extérieure et le point le plus radialement extérieur de la nervure (26), est inférieure d'au moins 1 mm à la distance radiale (dc) entre la surface radialement extérieure (SRE) de la couche ondulée la plus radialement extérieure et le point le plus radialement extérieur de la nervure (26), distance à l'aplomb du sillon (25) le plus proche de l'ondulation (312) considérée,
**caractérisé en ce que** la distance radiale (da) entre au moins une arrête de contact d'une nervure (26) à l'aplomb de laquelle se trouve une ondulation, et le rayon transversal RT de la surface de roulement hors épaule est au moins égale à 0.2 mm et au plus égale à 2 mm.

2. Pneumatique selon la revendication 1, **dans lequel** la distance radiale (da) entre au moins une arrête de contact d'une nervure (26) à l'aplomb de laquelle se trouve une ondulation, et entre le rayon transversal RT de la nervure considérée est au moins égale à 0.5 mm et au plus égale à 1.5 mm.

3. Pneumatique selon l'une quelconque des revendications précédentes, **dans lequel** la distance radiale (da) entre les arêtes de contact des nervures (26) à l'aplomb desquelles se trouve une ondulation, et entre le rayon transversal RT des nervures considérées est au moins égale à 0.5 mm et au plus égal à 1.5 mm.

4. Pneumatique selon l'une quelconque des revendications précédentes, **dans lequel** une nervure à l'aplomb de laquelle se trouve une ondulation d'une armature de sommet est telle que son arête de contact joint le rayon transversal RT de la nervure suivant une courbe continument variable.

5. Pneumatique selon l'une quelconque des revendications précédentes, **dans lequel** une nervure à l'aplomb de laquelle se trouve une ondulation d'une armature de sommet est telle que son arête de contact joint le rayon transversal RT de la nervure suivant un arrondi d'un rayon au moins égal à 2 mm et au plus égal à 8 mm.

6. Pneumatique selon l'une quelconque des revendications précédentes, **dans lequel** une nervure à l'aplomb de laquelle se trouve une ondulation d'une armature de sommet est telle que son arête de contact joint le rayon transversal RT de la nervure suivant un chanfrein formant un angle avec le rayon transversal RT au moins égal à 10° et au plus égal à 45° sur une longueur axiale au moins égale à 2 mm et au plus égale à 10 mm.

7. Pneumatique selon l'une quelconque des revendications précédentes, **dans lequel** à l'aplomb d'au moins une nervure (26) où se trouve une ondulation (312), la distance radiale minimale (do), entre la surface radialement extérieure (SRE) de la couche ondulée la plus radialement extérieure et le point le plus radialement extérieur de la nervure considérée (26), est inférieure d'au moins 1.5 mm, préférentiellement d'au moins 2 mm à la distance radiale (dc) entre la surface radialement extérieure (SRE) de la couche ondulée la plus radialement extérieure et le point le plus radialement extérieur de la nervure considérée (26), distance à l'aplomb du sillon (25) le plus proche de l'ondulation (312) considérée.

8. Pneumatique selon l'une quelconque des revendications précédentes, **dans lequel** à l'aplomb d'au moins une nervure (26) où se trouve une ondulation (312), la distance radiale minimale (do), entre la surface radialement extérieure (SRE) de la couche ondulée la plus radialement extérieure et le point le plus radialement extérieur de la nervure (26) considérée, est inférieure d'au plus 5 mm, préférentiellement d'au plus 3 mm à la distance radiale (dc) entre la surface radialement extérieure (SRE) de la couche ondulée la plus radialement extérieure et le point le plus radialement extérieur de la nervure (26)considérée, distance à l'aplomb du sillon (25) le plus proche de l'ondulation (312) considérée.

9. Pneumatique selon l'une quelconque des revendications précédentes, **dans lequel,** au rayon du point (10) le plus axialement extérieur du pneumatique, la distance axiale dg entre la couche de renfort (9) la plus axialement intérieure et le point le plus axialement intérieur, est au plus égale à 7 mm.

10. Pneumatique selon l'une quelconque des revendications précédentes, **dans lequel,** une ondulation (312) de la couche ondulée est présente à l'aplomb de toutes les nervures (26) de la surface de roulement (21).

11. Pneumatique selon l'une quelconque des revendications précédentes, **dans lequel,** une ondulation (312) de la couche ondulée la plus radialement extérieure est présente uniquement à l'aplomb des nervures (26) de la surface de roulement (21) les plus proches axialement du plan circonférentiel médian, de part et d'autre de ce plan.

12. Pneumatique selon l'une quelconque des revendications précédentes, disposant de témoins d'usure et dans lequel la distance radiale (du) entre la surface radialement extérieure (SRE) de la couche la plus radialement extérieure de l'armature de sommet (3) et la surface de roulement considérée (21) est au moins égale à la distance radiale (df) entre la surface de roulement (21) et le point le plus radialement extérieur des témoins d'usure (11).

13. Pneumatique selon l'une quelconque des revendications précédentes, **dans lequel** la distance radiale minimale (du) entre la surface radialement extérieure (SRE) de la couche la plus radialement extérieure de l'armature de sommet (3) et la surface de roulement (21) est au plus égale à la profondeur D du sillon circonférentiel (25) le plus proche augmentée de 4 mm et au moins égale à la profondeur D du sillon circonférentiel (25) le plus proche diminuée de 2 mm.

14. Pneumatique selon l'une quelconque des revendications précédentes, **dans lequel** au moins une gomme de bourrage (6) d'une épaisseur radiale au moins égale à 0.3 mm est à l'aplomb de toute ondulation (312) d'une couche ondulée.

15. Pneumatique selon l'une quelconque des revendications précédentes, la bande de roulement (2) étant constituée par un mélange caoutchouteux, **dans lequel** la gomme de bourrage (6) est un mélange caoutchouteux ayant une perte dynamique tanδ1, mesurée à une température de 23°C et sous une contrainte de 0.7 MPa à 10 Hz, au plus égale et préférentiellement inférieure de 30% à la perte dynamique tanδ2 du matériau caoutchouteux constitutif de la bande de roulement (2), mesurée à une température de 23°C et sous une contrainte de 0.7 MPa à 10 Hz.

## Patentansprüche

1. Reifen für ein Fahrzeug, umfassend:
• einen Laufstreifen (2), der dazu bestimmt ist, über eine Lauffläche (21) mit einem Boden in Kontakt zu treten, mit einer axialen Breite LSR, und eine Lauffläche ohne Schulter, die auf der mittleren Umfangsebene des Reifens zentriert ist und eine axiale Breite LSR' von 80 % der axialen Breite LSR der Lauffläche aufweist,
• wobei die Lauffläche ohne Schulter Rillen umfasst, wobei die Rillen einen zur Lauffläche (21) hin offenen Raum bilden und von mindestens zwei durch eine Bodenfläche (243) verbundenen seitlichen Hauptflächen (241, 242) begrenzt sind,
• wobei mindestens eine Rille der Lauffläche ohne Schulter, die im Wesentlichen umlaufend ist und als Umfangsrille (25) bezeichnet wird, eine durch den Abstand zwischen den beiden seitliche Flächen (241, 242) definierte Breite W von mindestens 5 mm und eine durch den maximalen radialen Abstand zwischen der Lauffläche (21) und der Bodenfläche (243) definierte Tiefe D von mindestens 4 mm aufweist,
• wobei mindestens zwei Rippen (26) in der Lauffläche ohne Schulter jeweils mindestens eine Kontaktkante besitzen, die als Schnittstelle zwischen der Rippe und der die Rippe begrenzenden seitlichen Fläche der Umfangsrille (25) definiert ist,
• wobei der Reifen (1) ferner eine Scheitelbewehrung (3) umfasst, die radial innerhalb des Laufstreifens (2) liegt und eine Arbeitsbewehrung (4) umfasst,
• wobei die Arbeitsbewehrung (4) mindestens eine Arbeitsschicht (41, 42) umfasst,
• wobei sich jede Schicht der Scheitelbewehrung radial von einer radial inneren Fläche (SRI) zu einer radial äußeren Fläche (SRE) erstreckt,
• wobei mindestens eine Arbeitsschicht (41 oder 42) Verstärkungselemente (411) umfasst, die von einer axial äußeren Kante der Arbeitsschicht bis zur gegenüberliegenden axial äußeren Kante durchgehend sind, mindestens teilweise metallisch sind, mit einem Elastomermaterial umhüllt sind, zueinander parallel sind und mit der Umfangsrichtung (XX') des Reifens einen ausgerichteten Winkel bilden, deren Absolutwert mindestens 15° und höchstens 50° beträgt,
• eine Karkassenbewehrung (9) radial innerhalb der Scheitelbewehrung,
wobei mindestens eine als gewellte Schicht bezeichnete Schicht (41, 42, 5) der Scheitelbewehrung (3) lotrecht zu einer Rippe (26) mindestens eine Wellung (312) umfasst, wobei die Scheitelbewehrungsschicht Verstärkungselemente von einer axial äußeren Kante der Scheitelbewehrungsschicht bis zur gegenüberliegenden axial äußeren Kante umfasst,
wobei die mindestens eine Wellung (312) der radial äußersten gewellten Schicht derart ist, dass der Abschnitt der radial äußersten gewellten Schicht der Wellung (312) radial außerhalb der Punkte der radial äußersten gewellten Schicht lotrecht zur Mitte der Bodenfläche (243) der der Wellung (312) am nächsten liegenden Rille (25) ist,
wobei der radiale Abstand (d1) zwischen der radial äußeren Fläche (SRE) der radial äußersten Arbeitsschicht (41) und der Bodenfläche (243) der umlaufenden Rillen (25) mindestens 1 mm und höchstens 6 mm, vorzugsweise mindestens 2 mm und höchstens 4 mm, beträgt,
wobei die mindestens eine Wellung (312) der radial äußersten gewellten Schicht derart ist, dass lotrecht zur Rippe (26), an der sich eine Wellung (312) befindet, der minimale radiale Abstand (do) zwischen der radial äußeren Fläche (SRE) der radial äußersten gewellten Schicht und dem radial äußersten Punkt der Rippe (26), um mindestens 1 mm kleiner ist als der zu der der betreffenden Wellung (312) am nächsten liegenden Rille (25) lotrechte radiale Abstand (dc) zwischen der radial äußeren Fläche (SRE) der radial äußersten gewellten Schicht und dem radial äußersten Punkt der Rippe (26),
**dadurch gekennzeichnet, dass** der radiale Abstand (da) zwischen mindestens einer Kontaktkante einer Rippe (26), zu der sich lotrecht eine Wellung befindet, und dem Querschnittsradius RT der Lauffläche ohne Schulter mindestens 0,2 mm und höchstens 2 mm beträgt.

2. Reifen nach Anspruch 1, wobei der radiale Abstand (da) zwischen mindestens einer Kontaktkante einer Rippe (26), zu der sich lotrecht eine Wellung befindet, und dem Querschnittsradius RT der betreffenden Rippe mindestens 0,5 mm und höchstens 1,5 mm beträgt.

3. Reifen nach einem der vorangehenden Ansprüche, wobei der radiale Abstand (da) zwischen den Kontaktkanten der Rippen (26), zu denen sich lotrecht eine Wellung befindet, und dem Querschnittsradius RT der betreffenden Rippen mindestens 0,5 mm und höchstens 1,5 mm beträgt.

4. Reifen nach einem der vorangehenden Ansprüche, wobei eine Rippe, zu der sich lotrecht eine Wellung einer Scheitelbewehrung befindet, derart ist, dass sich ihre Kontaktkante in einer kontinuierlich veränderlichen Kurve an den Querschnittsradius RT der Rippe anschließt.

5. Reifen nach einem der vorangehenden Ansprüche, wobei eine Rippe, zu der sich lotrecht eine Wellung einer Scheitelbewehrung befindet, derart ist, dass sich ihre Kontaktkante mit einem Abrundungsradius von mindestens 2 mm und höchstens 8 mm an den Querschnittsradius RT der Rippe anschließt.

6. Reifen nach einem der vorangehenden Ansprüche, wobei eine Rippe, zu der sich lotrecht eine Wellung einer Scheitelbewehrung befindet, derart ist, dass sich ihre Kontaktkante in einer Abschrägung, die mit dem Querschnittsradius RT einen Winkel von mindestens 10° und höchstens 45° über eine axiale Länge von mindestens 2 mm und höchstens 10 mm bildet, an den Querschnittsradius RT der Rippe anschließt.

7. Reifen nach einem der vorangehenden Ansprüche, wobei lotrecht zu mindestens einer Rippe (26), an der sich eine Wellung (312) befindet, der minimale radiale Abstand (do) zwischen der radial äußeren Fläche (SRE) der radial äußersten gewellten Schicht und dem radial äußersten Punkt der betreffende Rippe (26) um mindestens 1,5 mm, vorzugsweise um mindestens 2 mm, kleiner ist als der zu der der betreffenden Wellung (312) am nächsten liegenden Rille (25) lotrechte radiale Abstand (dc) zwischen der radial äußeren Fläche (SRE) der radial äußersten gewellten Schicht und dem radial äußersten Punkt der betreffenden Rippe (26).

8. Reifen nach einem der vorangehenden Ansprüche, wobei lotrecht zu mindestens einer Rippe (26), an der sich die eine Wellung (312) befindet, der minimale radiale Abstand (do) zwischen der radial äußeren Fläche (SRE) der radial äußersten gewellten Schicht und dem radial äußersten Punkt der betreffenden Rippe (26) um höchstens 5 mm, vorzugsweise um höchstens 3 mm, kleiner ist als der zu der der betreffenden Wellung (312) am nächsten liegenden Rille (25) lotrechte radiale Abstand (dc) zwischen der radial äußeren Fläche (SRE) der radial äußersten gewellten Schicht und dem radial äußersten Punkt der betreffenden Rippe (26).

9. Reifen nach einem der vorangehenden Ansprüche, wobei am Radius des axial äußersten Punktes (10) des Reifens der axiale Abstand dg zwischen der axial innersten Verstärkungsschicht (9) und dem axial innersten Punkt höchstens 7 mm beträgt.

10. Reifen nach einem der vorangehenden Ansprüche, wobei eine Wellung (312) der gewellten Schicht lotrecht zu allen Rippen (26) der Lauffläche (21) vorhanden ist.

11. Reifen nach einem der vorangehenden Ansprüche, wobei eine Wellung (312) der radial äußersten gewellten Schicht nur lotrecht zu den Rippen (26) der Lauffläche (21), die der mittleren Umfangsebene am nächsten liegen, auf beiden Seiten dieser Ebene vorhanden ist.

12. Reifen nach einem der vorangehenden Ansprüche, der über Verschleißindikatoren verfügt und bei dem der radiale Abstand (du) zwischen der radial äußeren Fläche (SRE) der radial äußersten Schicht der Scheitelbewehrung (3) und der betreffenden Lauffläche (21) mindestens gleich dem radialen Abstand (df) zwischen der Lauffläche (21) und dem radial äußersten Punkt der Verschleißindikatoren (11) ist.

13. Reifen nach einem der vorangehenden Ansprüche, wobei der minimale radiale Abstand (du) zwischen der radial äußeren Fläche (SRE) der radial äußersten Schicht der Scheitelbewehrung (3) und der Lauffläche (21) höchstens gleich der um 4 mm erhöhten Tiefe D der nächstgelegenen Umfangsrille (25) und mindestens gleich der um 2 mm verringerten Tiefe D der nächstgelegenen Umfangsrille (25) ist.

14. Reifen nach einem der vorangehenden Ansprüche, wobei mindestens ein Füllstoffgummi (6) mit einer radialen Dicke von mindestens 0,3 mm lotrecht zu jeder Wellung (312) einer gewellten Schicht ist.

15. Reifen nach einem der vorangehenden Ansprüche, wobei der Laufstreifen (2) aus einer Kautschukmischung gebildet ist, wobei der Füllstoffgummi (6) eine Kautschukmischung ist, die einen dynamischen Verlust tanδ1, gemessen bei einer Temperatur von 23°C und unter einer Belastung von 0,7 MPa bei 10 Hz, von höchstens und vorzugsweise weniger als 30 % des dynamischen Verlusts tanδ2 der den Laufstreifen (2) bildenden Kautschukmischung, gemessen bei einer Temperatur von 23°C und unter einer Spannung von 0,7 MPa bei 10 Hz, aufweist.

## Claims

1. Tyre for a vehicle, comprising:
• a tread (2) intended to come into contact with the ground via a tread surface (21), of axial width LSR, and a tread surface away from the shoulder, centred on the median circumferential plane of the tyre and having an axial width LSR' equal to 80% of the axial width LSR of the tread surface,
• the tread surface away from the shoulder comprising grooves, the grooves forming a space that opens onto the tread surface (21) and being delimited by at least two main lateral faces (241, 242) connected by a bottom face (243),
• at least one groove in the tread surface away from the shoulder being substantially circumferential, being referred to as a circumferential furrow (25) having a width W, defined by the distance between the two lateral faces (241, 242), at least equal to 5 mm, and a depth D, defined by the maximum radial distance between the tread surface (21) and the bottom face (243), at least equal to 4 mm,
• at least two ribs (26) on the tread surface away from the shoulder, each having at least one contact edge corner defined as the intersection between the rib and the lateral face of the circumferential furrow (25) delimiting the rib,
• the tyre (1) also comprising a crown reinforcement (3), radially on the inside of the tread (2), comprising a working reinforcement (4),
• the working reinforcement (4) comprising at least one working layer (41, 42),
• each layer of the crown reinforcement extending radially from a radially inner surface (RIS) to a radially outer surface (ROS),
• at least one working layer (41 or 42) comprising reinforcing elements (411) which are continuous from one axially outer edge of the working layer to the opposite axially outer edge, are at least partially made of metal coated in an elastomer material, are mutually parallel and form with the circumferential direction (XX') of the tyre an oriented angle of which the absolute value is at least equal to 15° and at most equal to 50°,
• a carcass reinforcement (9) radially on the inside of the crown reinforcement, at least one layer (41, 42, 5), referred to as undulated layer, of the crown reinforcement (3) comprises, in line with a rib (26), at least one undulation (312), said layer of the crown reinforcement comprising reinforcing elements, from one axially outer edge of the layer of the crown reinforcement to the opposite axially outer edge,
the at least one undulation (312) in the radially outermost undulated layer is such that the radially outermost undulated layer portion of the undulation (312) is radially on the outside of the points of the radially outermost undulated layer that are in line with the centre of the bottom face (243) of the furrow (25) closest to said undulation (312),
the radial distance (d1) between the radially outer surface (ROS) of the radially outermost working layer (41) and the bottom face (243) of the circumferential furrows (25) is at least equal to 1 mm and at most equal to 6 mm, preferably at least equal to 2 mm and at most equal to 4 mm,
the at least one undulation (312) in the radially outermost undulated layer is such that, in line with the rib (26) where an undulation (312) is located, the minimum radial distance (do) between the radially outer surface (ROS) of the radially outermost undulated layer and the radially outermost point of the rib (26) is at least 1 mm less than the radial distance (dc) between the radially outer surface (ROS) of the radially outermost undulated layer and the radially outermost point of the rib (26), which is the distance in line with the furrow (25) closest to the undulation (312) in question,
**characterized in that** the radial distance (da) between at least one contact edge corner of a rib (26) in line with which an undulation is located, and the transverse radius RT of the tread surface away from the shoulder is at least equal to 0.2 mm and at most equal to 2 mm,

2. Tyre according to Claim 1, **wherein** the radial distance (da) between at least one contact edge corner of a rib (26) in line with which an undulation is located, and the transverse radius RT of the rib in question is at least equal to 0.5 mm and at most equal to 1.5 mm.

3. Tyre according to any of the preceding claims, **wherein** the radial distance (da) between the contact edge corners of the ribs (26) in line with which an undulation is located, and the transverse radius RT of the ribs in question is at least equal to 0.5 mm and at most equal to 1.5 mm.

4. Tyre according to any of the preceding claims, **wherein** a rib in line with which an undulation of a crown reinforcement is located is such that its contact edge corner joins the transverse radius RT of the rib along a continuously variable curve.

5. Tyre according to any of the preceding claims, **wherein** a rib in line with which an undulation of a crown reinforcement is located is such that its contact edge corner joins the transverse radius RT of the rib along a rounded portion having a radius at least equal to 2 mm and at most equal to 8 mm.

6. Tyre according to any of the preceding claims, **wherein** a rib in line with which an undulation of a crown reinforcement is located is such that its contact edge corner joins the transverse radius RT of the rib along a chamfer that forms an angle with the transverse radius RT at least equal to 10° and at most equal to 45° along an axial length at least equal to 2 mm and at most equal to 10 mm.

7. Tyre according to any of the preceding claims, **wherein,** in line with at least one rib (26) where an undulation (312) is located, the minimum radial distance (do) between the radially outer surface (ROS) of the radially outermost undulated layer and the radially outermost point of the rib (26) in question is at least 1.5 mm less, preferably at least 2 mm less, than the radial distance (dc) between the radially outer surface (ROS) of the radially outermost undulated layer and the radially outermost point of the rib (26) in question, which is the distance in line with the furrow (25) closest to the undulation (312) in question.

8. Tyre according to any of the preceding claims, **wherein,** in line with at least one rib (26) where an undulation (312) is located, the minimum radial distance (do) between the radially outer surface (ROS) of the radially outermost undulated layer and the radially outermost point of the rib (26) in question is at most 5 mm less, preferably at most 3 mm less, than the radial distance (dc) between the radially outer surface (ROS) of the radially outermost undulated layer and the radially outermost point of the rib (26) in question, which is the distance in line with the furrow (25) closest to the undulation (312) in question.

9. Tyre according to any of the preceding claims, **wherein,** at the radius of the axially outermost point (10) of the tyre, the axial distance dg between the axially innermost reinforcer layer (9) and the axially innermost point is at most equal to 7 mm.

10. Tyre according to any of the preceding claims, **wherein** an undulation (312) of the undulated layer is present in line with all the ribs (26) on the tread surface (21).

11. Tyre according to any of the preceding claims, **wherein** an undulation (312) of the radially outermost undulated layer is present only in line with the ribs (26) on the tread surface (21) that are axially closest to the median circumferential plane, on either side of this plane.

12. Tyre according to any of the preceding claims, having wear indicators and wherein the radial distance (du) between the radially outer surface (ROS) of the radially outermost layer of the crown reinforcement (3) and the tread surface (21) in question is at least equal to the radial distance (df) between the tread surface (21) and the radially outermost point of the wear indicators (11).

13. Tyre according to any of the preceding claims, **wherein** the minimum radial distance (du) between the radially outer surface (ROS) of the radially outermost layer of the crown reinforcement (3) and the tread surface (21) is at most equal to the depth D of the closest circumferential furrow (25) plus 4 mm and at least equal to the depth D of the closest circumferential furrow (25) minus 2 mm.

14. Tyre according to any of the preceding claims, **wherein** at least one element of padding rubber (6), having a radial thickness at least equal to 0.3 mm is in line with any undulation (312) of an undulated layer.

15. Tyre according to any of the preceding claims, the tread (2) being made up of a rubber compound, **wherein** the element of padding rubber (6) is a rubber compound that has a dynamic loss tanδ1, measured at a temperature of 23°C and under a stress of 0.7 MPa at 10 Hz, at most equal to and preferably 30% less than the dynamic loss tanδ2 of the rubber material of which the tread (2) is made, measured at a temperature of 23°C and under a stress of 0.7 MPa at 10 Hz.
